# EUROPEAN PATENT SPECIFICATION

(11) **EP 1 306 043 B1**
(45) Date of publication and mention of the grant of the patent: **13.07.2005**
(21) Application number: 02102473.2
(22) Date of filing: 22.10.2002
(51) Int. Cl.: A47J 37/07

(54) **Barbecue**
Grill
Barbecue

(30) Priority: 24.10.2001 IT AN20010045
(43) Date of publication of application: 02.05.2003
(73) Proprietor: Consorte, Ruggiero, 66023 Francavilla al Mare (Chieti) (IT)
(72) Inventor: Consorte, Ruggiero, 66023 Francavilla al Mare (Chieti) (IT)
(74) Representative: Faggioni, Carlo Maria, Dr. Ing.

(56) References cited:
- EP-A- 0 255 548
- DE-A- 3 126 903
- US-A- 3 550 525
- US-A- 3 742 838
- US-A- 4 619 190

## Description

The present invention concerns a barbecue to grill food, especially meats.

Due to the reduction of available open green spaces and to the increased requirements of safety, the barbecue has been replacing, already since several years, the traditional grills on bonfires or on the fixed and bulky stone structures. In fact, the barbecue is apt to efficiently contain the flames, it requires a limited maintenance and it can be shifted without any problems by being carried on the grilling spot and being then removed after use, so as not to form a permanent bulk.

Nevertheless, the cooking of meats on a barbecue, is potentially cancerogenous - due to the fact that the meats are directly exposed to the toxic vapours produced by the incomplete combustion of the coals - and furthermore usually produces a lot of smoke, due to burning of the fats, also when using charcoal which, as opposed to wood, produces no smoke in itself. This is extremely unpleasant and prevents the use of the barbecue in environments where also other people are present, especially on balconies of buildings with flats.

To overcome these drawbacks, the Applicant had proposed - with the Italian Patent Application No. CH98A 000011 - a barbecue for grilling food, in which the combustion area consists of a pair of vertical containers, between which the grill to cook the meat is positioned.

However, said solution still involves some inconveniences. In fact, such a structure does not allow to easily move the containers in respect of the grill while cooking, which operation is required for a proper grilling of the meats and to prevent them from getting burnt. Furthermore, it requires the use of a far higher amount of charcoal than that commonly used, with evident disadvantages from the economical and ecological point of view.

US-3742838 discloses a grill device for cooking food by means of heating materials, such as charcoal or the like, which includes a housing apt to enclose and support a food holding member and a pair of heating material holding members adjustably positionable on opposite sides of the food holding member.

US-4619190 refers to a vertically oriented fuel bed elongated in the vertical direction which provides a vertical radiant source of heat for cooking food in cooking zones on either side of the bed; the radiant vertical heat source is supported in the centre of a frame, removeably suspended from the top tier.

To overcome all these and other drawbacks, the Applicant has conceived the present invention which concerns a barbecue to grill food comprising a support and a bearing surface or base, a vertically positioned combustion area for the charcoal, and at least one grill or roasting jack to cook the food, wherein said combustion area for the charcoal consists of a single container with pierced sidewalls, open at the top with the opening section wider than the rest of the container, and wherein the grill or grills or the roasting jack are positioned parallel to said pierced sidewalls, characterised in that the combustion container is kept in position by a connection bracket and by a stop plate which engages into suitable holes formed on the base.

Preferably, the bearing surface can comprise one or more inclined planes and a hole can be formed onto the bottom of at least one of the inclined planes so as to collect the melted fats produced by the meat being grilled.

The present invention will now be described in further detail, with reference to the accompanying drawings, in which:

Fig. 1 is an exploded view of a barbecue according to the present invention;

Fig. 2 is a perspective view of the barbecue according to the present invention; and

Fig. 3 is a perspective view, similar to that of fig. 2, of a barbecue according to an alternative embodiment of the present invention;

Fig. 4 is an exploded view of another alternative embodiment of the invention; and

Fig. 5 is a perspective view of the embodiment shown in Fig. 5.

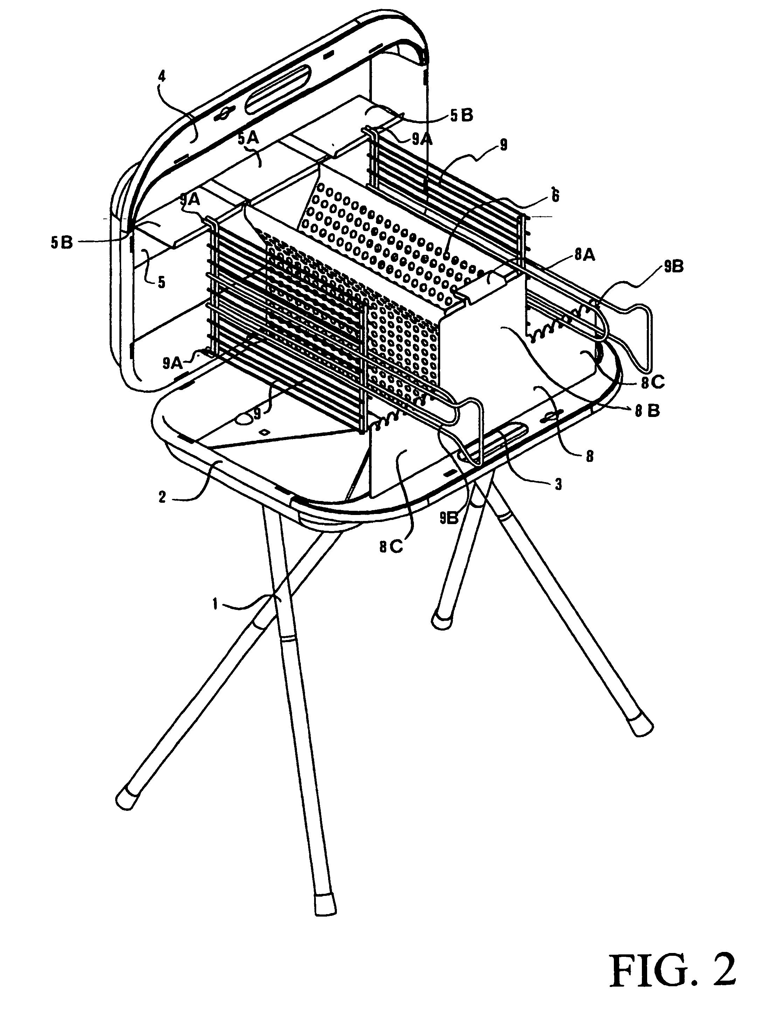

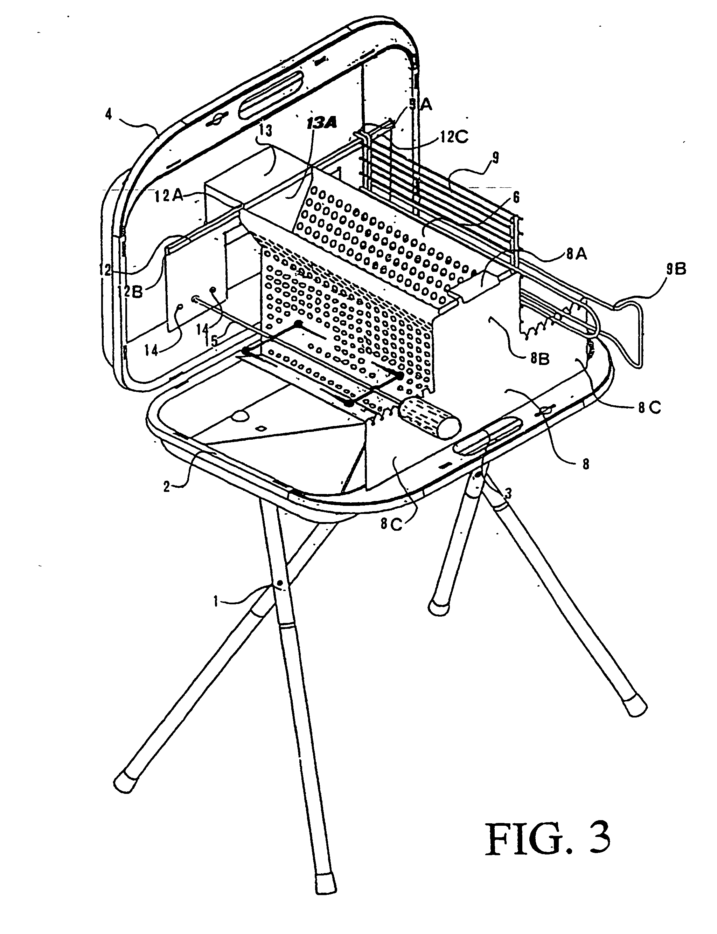

The barbecue according to the present invention comprises a support 1, which can be of any type, a bearing surface or base 2 provided with two slits 3, and a cover 4 which can be kept in a closed position or, as shown in figs. 2 and 3, it can be positioned perpendicular to the base 2. A connection bracket 5, divided into three sections, is fixed in known manner, in a suitable position, inside the cover 4. One side of the central section 5A is bent downwards to block a container 6 for the combustible material (usually charcoal).

The sidewalls of the container 6 are pierced, to allow an optimal outlet of the heat. Moreover, the top of the container 6 is open and wider than the rest, in order to improve the inlet of the air required for combustion and to allow an easy introduction of the charcoal.

The container 6 - which can be provided with one or more handles for its manipulation - rests onto a plate 7, which comprises opposite extending tabs to collect the charcoal dust possibly coming out from the holes of the container 6.

The container 6 is kept in position, also by a stop plate 8, as well as by the connection bracket 5, which engages into appropriate holes formed on the base 2 and which comprises a stop element 8A engaging with the container 6. The plate 8 comprises a central portion 8B - the one carrying the stop element 8A - and two smaller side portions 8C, provided at the top with a series of adjacent slits.

The side sections 5B of the connection bracket 5 have sides bending upwards.

Grills 9 - comprising two surfaces which close up, like the grills of a toaster - bear with one end 9A onto the sides bending upwards of the lateral sections 5B of the connection bracket 5, while their handle 9B bears onto a slit of one of the lateral portions 8C of the stop plate 8.

The bottom 10 of the base 2 is formed with inclined planes, converging downwards into a central hole 11.

In order to be able to use the barbecue with a roasting jack - according to the alternative embodiment shown in fig. 3 - two additional steel profiles are provided. The first profile 12 has a U-bent upper portion, divided into three parts, 12A, 12B, 12C, the central part 12A engaging onto an upper side of the container 6. The second steel profile consists of a bracket 13 (similar to the central section 5A of the bracket 5, but without the lateral sections 5B), with a connecting end 13A apt to lock the steel profile 12 and the container 6. The steel profile 12 comprises two plates provided at the bottom with holes 14, into which the tip of a roasting jack 15 can be inserted. As shown in fig. 3, the plates of the section 12 are also apt to support the grills 9 on their upper side, performing exactly the same function as the bracket 5.

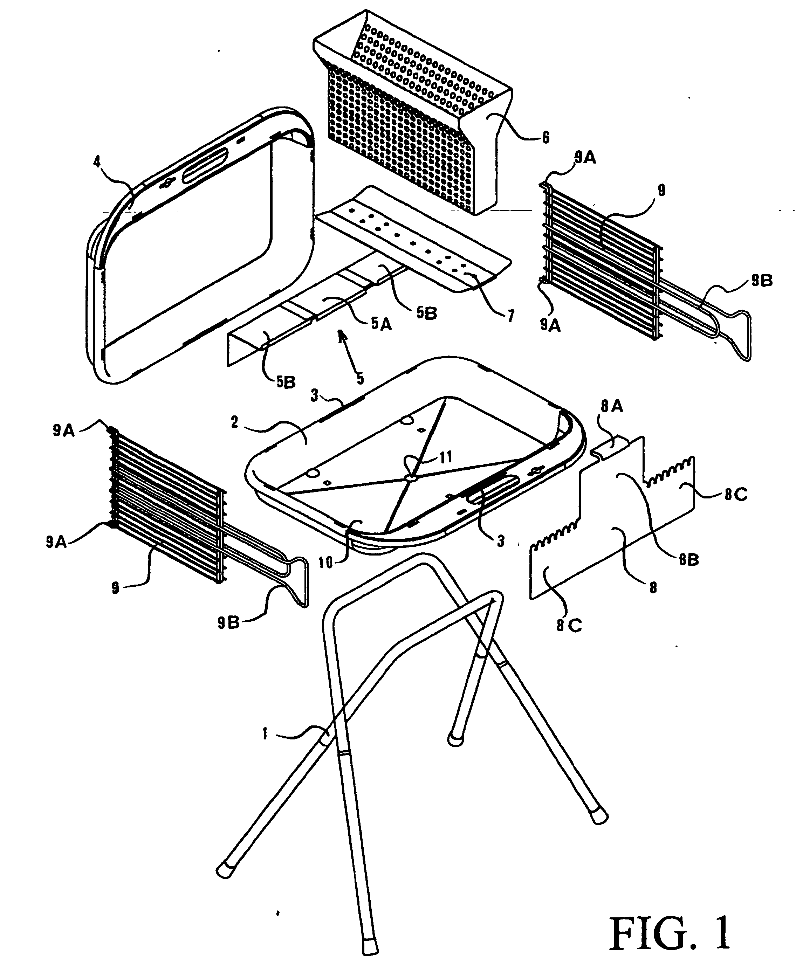

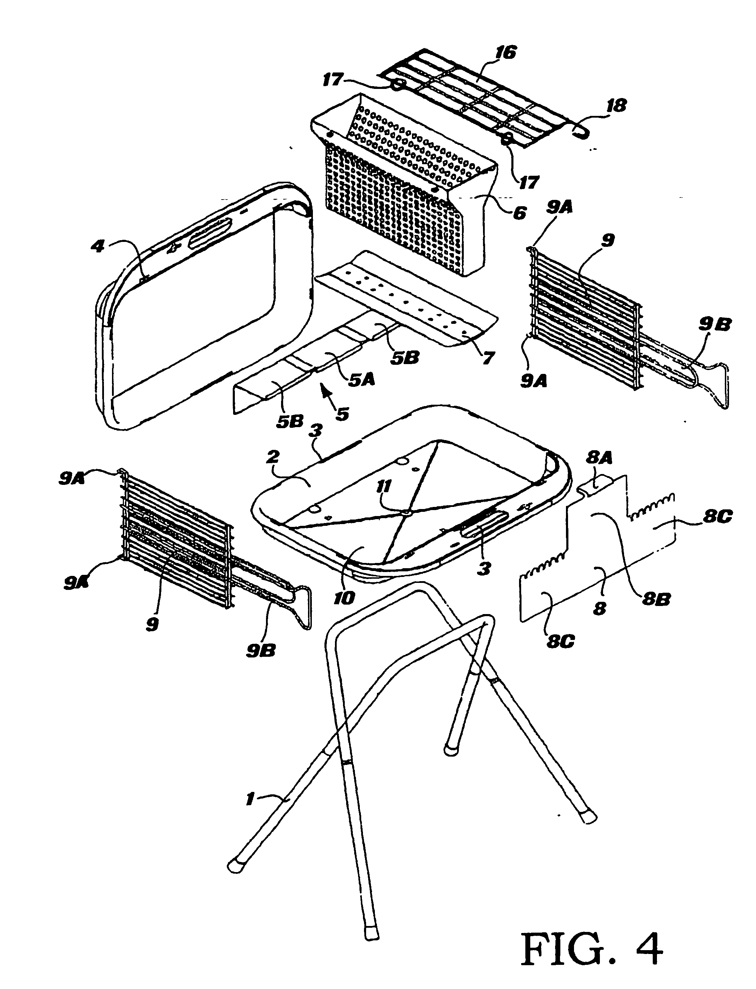

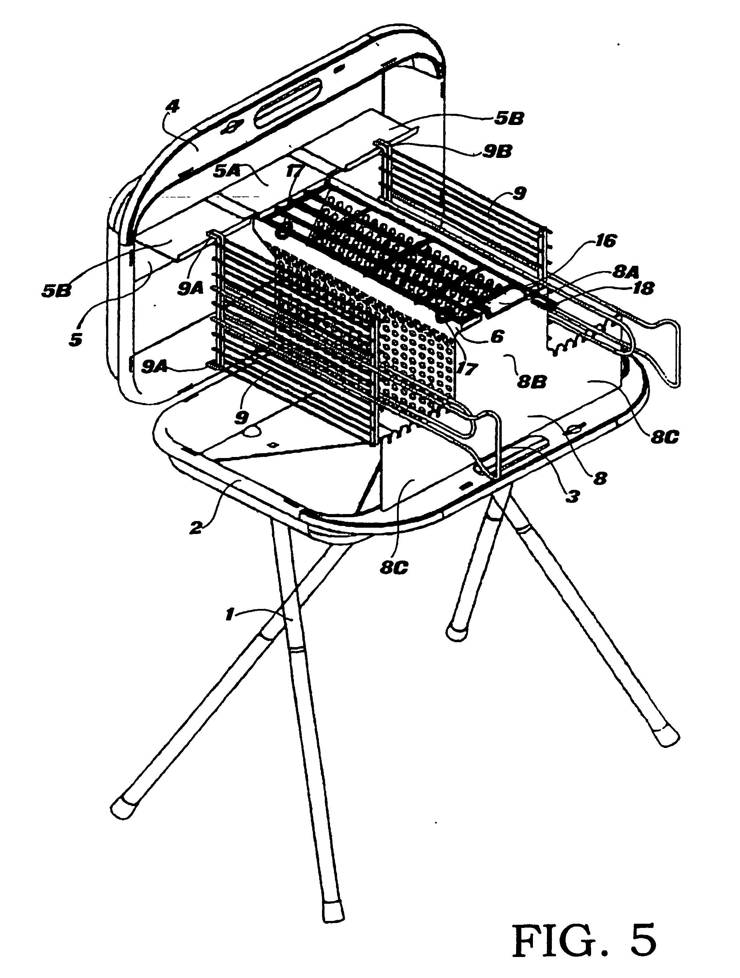

The other alternative embodiment of the present invention, which is shown in Figs. 4 and 5, is very similar to the one shown in Figs. 1 and 2. Moreover, it comprises an additional grill, provided with two connecting rings 17 and with a handle 18. Two pins 19 are provided on one upper side of the container 6, according to this embodiment.

When not in use, the barbecue according to the present invention looks like a closed suitcase, enclosing all its components. Viceversa, when wishing to use the barbecue, after having opened the cover 4 one positions the support 1, placing thereon the base 2; one then lifts the stop plate 8 - previously mounted on the base 2 by means of hinges - and one inserts the two opposite extending tabs of the rest plate 7 into the two slits 3 of the base 2. The container 6 is then positioned onto the rest plate 7 and it is inserted under the side bent downwards of the central section 5A of the connection bracket 5; subsequently, the bottom of the stop plate 8 is fixed into the holes of the base 2, so as to block in position the container 6 by means of the stop element 8A and, at the same time, vertically block the cover 4 by engagement of the connection bracket 5 with the container 6. The container 6 is then filled with the required amount of charcoal, which is lighted. Once a steady combustion has been reached, the meat is placed inside the grills 9 which are then positioned so that their end 9A bears onto the corresponding section 5B of the bracket 5 and their handle 9B is set into one of the slits of the portion 8C of the plate 8. According to the heat being transmitted and to the type of cooking required one will choose to set the handle 9B of the grill 9 into a slit more or less close to the container 6. If one intends to use also the other grill 9, the same operation must be repeated on the other side of the container 6.

If wishing to use a roasting jack 15 instead of the grills 9 - for instance to roast a chicken - its tip will have to be inserted into one of the holes 14 formed on the plate of the section 12, while the rotating handle of the jack must bear onto the slits of the portion 8C of the plate 8.

While the meat is being cooked, a lot of the fat contained therein melts and drops down from the meat surface. Due to the special positioning of the grills - or of the roasting jack - in respect of the charcoal, the fat is not apt to penetrate into the container 6, whereby it cannot get in contact with the live coal; this prevents the presence of the huge amount of smoke which normally develops at a certain point when cooking on the conventional type barbecues. On the other hand, the presence of the holes on the walls of the container 6 favours the outlet of the heat, which thus envelops the meat sufficiently to obtain a perfect cooking thereof, while eliminating the drawbacks of other known devices. When using the embodiment of Figs. 4 and 5, the grill 16 can be positioned onto the open top of the container 6, by fitting the rings 17 on the pins 19. The additional grill 16 can be used for that foodstocks not producing smoke, like vegetables. The handle 18 can be used to put and to remove the grill during the cooking process. In this way, the whole produced heat is used, so as to prepare a complete meal. This embodiment has been described as a development of the embodiment shown in Figs. 1 and 2, but it of course applies also to the embodiment of Fig. 3.

Moreover, the slits on the top of the portions 8C of the plate 8 allow to adjust at best the cooking speed and to regulate the cooking level of the meat placed into the grills 9. Finally, the bottom 10 of the base 1, with inclined converging planes, allows the melted fat to flow down towards the hole 11, where it is let out - for example into a glass, or like - so that the bottom 10 of the base 1 can always be kept clean after use, with a few simple operations.

## Claims

1. Barbecue to grill food, comprising a support (1) and a bearing surface or base (2), a vertically positioned combustion area (6) for the charcoal, and at least one grill (9) or roasting jack (15) to cook the food, wherein said combustion area (6) for the charcoal consists of a single container (6) with pierced sidewalls, open at the top with the opening section wider than the rest of the container and wherein the grill or the grills (9) or the roasting jack (15) are positioned parallel to said pierced sidewalls, **characterised in that** the combustion container (6) is kept in position by a connection bracket (5) and by a stop plate (8) which is suitable to engage into suitable holes formed on the base (2).

2. Barbecue as claimed in claim 1), **characterised in that** the combustion container (6) rests onto a plate (7) comprising opposite extending tabs.

3. Barbecue as claimed in claim 1) or 2), **characterised in that** said stop plate (8) comprises a stop element (8A).

4. Barbecue as claimed in any previous claim, **characterised in that** the stop plate (8) comprises a central portion (8B) and two lower lateral portions (8C).

5. Barbecue as claimed in claim 4), **characterised in that** the lateral portions (8C) are provided at the top with a series of adjacent slits.

6. Barbecue as claimed in any previous claim, **characterised in that** the bottom of the base (2) is formed with inclined planes, converging downwards into a central hole (11).

7. Barbecue as claimed in any previous claim, **characterised in that** said bracket (5) is divided into three sections, one side of the central section (5A) bending downwards and the lateral sections (5B) having sides bending upwards.

## Patentansprüche

1. Grill zum Grillen von Nahrungsmitteln, mit einem Träger (1) und einer Lagerungsoberfläche oder einem Unterteil (2), mit einer vertikal angeordneten Verbrennungszone (6) für die Holzkohle, und mit zumindest einem Grillelement (9) oder einem Brathebeelement (15) zum Garen der Nahrungsmittel, wobei die genannte Verbrennungszone (6) für die Holzkohle aus einem einzelnen Behälter (6) mit durchlöcherten Seitenwänden besteht, der an der Oberseite offen ist, wobei der Öffnungsquerschnitt weiter ist als der übrige Teil des Behälters und wobei das Grillelement oder die Grillelemente (9) oder das Brathebeelement (15) parallel zu den genannten durchlöcherten Seitenwänden positioniert sind, **dadurch gekennzeichnet, daß** der Verbrennungsbehälter (6) durch einen Verbindungsträger (5) und durch eine Anschlagplatte (8), die sich dazu eignet, in geeignete Löcher einzugreifen, die auf dem Unterteil (2) ausgebildet sind, in seiner Position gehalten wird.

2. Grill nach Anspruch 1, **dadurch gekennzeichnet, daß** der Verbrennungsbehälter (6) auf einer Platte (7) aufliegt, die sich entgegengesetzt erstreckende Ansätze aufweist.

3. Grill nach Anspruch 1 oder 2, **dadurch gekennzeichnet, daß** die genannte Anschlagplatte (8) ein Anschlagelement (8A) aufweist.

4. Grill nach einem der vorangehenden Ansprüche, **dadurch gekennzeichnet, daß** die Anschlagplatte (8) einen zentralen Abschnitt (8B) und zwei untere seitliche Abschnitte (8C) aufweist.

5. Grill nach Anspruch 4, **dadurch gekennzeichnet, daß** die seitlichen Abschnitte (8C) an der Oberseite mit einer Reihe von benachbarten Schlitzen versehen sind.

6. Grill nach einem der vorangehenden Ansprüche, **dadurch gekennzeichnet, daß** der Boden des Sockels (2) mit geneigten Ebenen ausgebildet ist, die in Richtung auf ein zentrales Loch (11) zusammenlaufen.

7. Grill nach einem der vorangehenden Ansprüche, **dadurch gekennzeichnet, daß** der genannte Träger (5) in drei Abschnitte unterteilt ist, wobei eine Seite des zentralen Abschnitts (5A) nach unten abgebogen ist und die seitlichen Abschnitte (5B) Seiten aufweisen, die nach oben abgebogen sind.

## Revendications

1. Barbecue pour griller des aliments, comportant un support (1) et une surface ou base (2) de support, une zone de combustion (6) positionnée verticalement pour le charbon de bois, et au moins une grille (9) ou une chemise (15) à rôtir pour la cuisson de l'aliment, dans lequel ladite zone de combustion (6) pour le charbon de bois consiste en un conteneur unique (6) à parois latérales percées, ouvert à la partie supérieure, la section d'ouverture étant plus large que la partie restante du conteneur, et dans lequel la grille ou les grilles (9) ou la chemise (15) à rôtir sont positionnées parallèlement auxdites parois latérales percées, **caractérisé en ce que** le conteneur (6) de combustion est maintenu en position par une console (5) de liaison et par une plaque de butée (8) qui est apte à s'engager dans des trous appropriés formés sur la base (2).

2. Barbecue selon la revendication 1, **caractérisé en ce que** le conteneur (6) de combustion repose sur une plaque (7) comprenant des languettes s'étendant de façon opposée.

3. Barbecue selon la revendication 1 ou 2, **caractérisé en ce que** ladite plaque de butée (8) comprend un élément de butée (8A).

4. Barbecue selon l'une quelconque des revendications précédentes, **caractérisé en ce que** la plaque de butée (8) comprend une partie centrale (8B) et deux parties latérales inférieures (8C).

5. Barbecue selon la revendication 4, **caractérisé en ce que** les parties latérales (8C) sont pourvues, à leur partie supérieure, d'une série de fentes adjacentes.

6. Barbecue selon l'une quelconque des revendications précédentes, **caractérisé en ce que** le fond de la base (2) est formé avec des plans inclinés, convergeant vers le bas jusque dans un trou central (11).

7. Barbecue selon l'une quelconque des revendications précédentes, **caractérisé en ce que** ladite console (5) est divisée en trois sections, un côté de la section centrale (5A) étant plié vers le bas et les sections latérales (5B) ayant des côtés pliés vers le haut.
